# EUROPEAN PATENT APPLICATION

(11) **EP 2 020 346 A2**
(43) Date of publication of application: **04.02.2009**
(21) Application number: 08160693.1
(22) Date of filing: 18.07.2008
(51) Int. Cl.: B60R 25/02, B60R 25/04

(54) **Apparatus and method for starting engine of automobile using start-button**

(30) Priority: 30.07.2007 KR 20070076373
(71) Applicant: Yang, Jae Woo, Daejun 305-755 (KR)
(72) Inventor: Yang, Jae Woo, 305-755, Daejun (KR); Ko, Jae Pyung, 626-765, Gyeongsangnam-Do (KR); Kim, Young Tak, 608-776, Busan (KR); Lee, Kyoung Moon, 602-832, Busan (KR); Kim, Min Seok, 606-804, Busan (KR)
(74) Representative: TBK-Patent

(57) **Abstract**

Provided are an apparatus and a method for starting the engine of an automobile using a start-button, which allow a proper user to start the engine through a simple operation of the start-button for starting the engine without having a car key. In the apparatus and method for starting the engine of an automobile, it is determined whether a plurality of signals including the start-button are on. A key FOB is requested to transmit its ID, the ID is received from the key FOB, and authentication is performed on the key FOB using the received ID when the signals are on. Power is provided to a starting motor and a driving signal is applied to a motor driver to drive a motor when the key FOB passes authentication. A shaft is driven according to the operation of the motor to operate a steering column (3) and the starting motor is driven to start the engine. A safety member is inserted into a first hole of the shaft to block the shaft from moving and rotating when the engine is started.

## Description

### BACKGROUND OF THE INVENTION

### 1.Field of the Invention

The present invention relates to an apparatus and a method for starting the engine of an automobile, and more particularly, to an apparatus and a method for starting the engine of an automobile using a start-button, which allow a proper user to start the engine through a simple operation of the start-button for starting the engine without having a car key.

### 2. Discussion of the Related Art

Generally, an ignition lock device for starting the engine of an automobile is also called a start switch for starting the engine and integrated with a locking device of a steering column in order to prevent the automobile from being stolen.

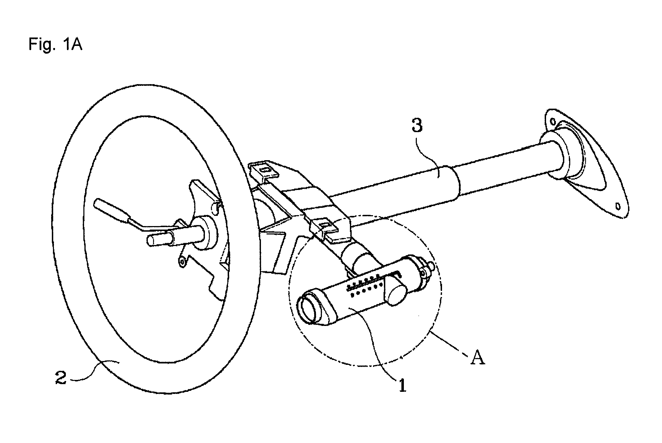

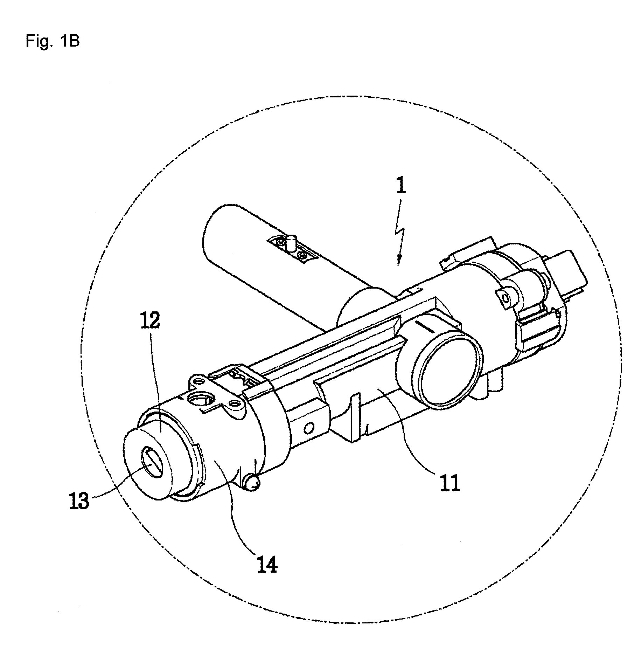

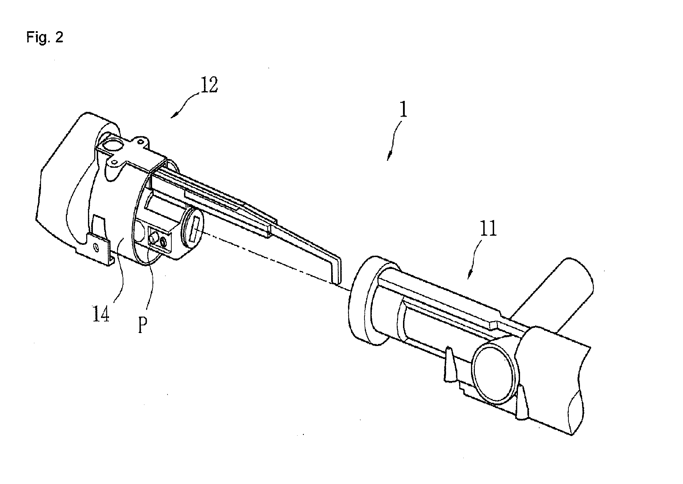

As shown in FIGS. 1A, 1B and 2, a conventional ignition lock device 1 of an automobile is fixed to a steering column 3 connected to a steering wheel 2 and includes a key hole 13 into which a car key is inserted by a driver.

More specifically, the ignition lock device 1 includes an ignition lock body 11 and a key cylinder 12. The ignition lock body 11 is integrated with the steering column 2 and fixed to the steering column 3 and includes the key hole 13 formed at the front side. The key cylinder 12 is combined with the inside of the ignition lock body 11 through a combining pin P and rotated with the car key being inserted thereinto such that the car key operates. The key cylinder 12 includes the key hole 13 and a cylinder cover 14 for protecting the outer face of the ignition lock body 11. The rotating operation of the car key is composed of four steps of a locking step, an accessory power supply step, a controller and driver on step, and a starting step. The car key is inserted into or ejected from the key hole 13 only in the locking step.

The aforementioned conventional ignition lock device is a mechanical lock device provided near a car door locking unit and the steering column. This mechanical lock device operates according to the rotating operation of the car key inserted by a driver to start the engine or cancel a locked state of the steering column.

However, the conventional mechanical lock device requires the driver to insert the car key thereinto and rotate the car key. Furthermore, even though the conventional mechanical lock device is damaged, the engine can be started through a simple operation. Accordingly, the automobile having the mechanical lock device is easily stolen.

To solve this problem, a smart key is provided to some of recent automobiles on the market. The car using the smart key has a key cylinder and a steering column in modified structures such that the car key cannot be inserted into the key cylinder when normal authentication is not performed. A user can lock/unlock the doors of the car only using the smart key and start the car according to an authentication result without inserting the car key into the key cylinder.

However, in the case of a car having no smart key, it is required to insert a mechanical key into the key cylinder and rotate the key to unlock the steering column in order to start the car. Accordingly, to apply the smart key to the car using the mechanical key to eliminate the inconvenience of inserting and rotating the key, the car key must be being inserted into the key cylinder all the time. In this case, the car can be stolen because the car key is being inserted into the key cylinder.

### SUMMARY OF THE INVENTION

It is an object of the present invention to provide an apparatus and a method for starting the engine of an automobile using a start-button, which allow a proper user to start the engine through a simple operation of the start-button for starting the engine without having a car key.

An apparatus for starting the engine of au automobile using a start-button according to the present invention comprises an ignition lock body, a key cylinder, a start-button, and a controller. The ignition lock body is connected to a steering column of the automobile. The key cylinder combined with the inside of the ignition lock body is extended into the ignition lock body and includes a motor with a shaft that is connected to the steering column and has a first hole formed at one end thereof and a safety member inserted/separated into/from the first hole. The start-button applies a starting signal for starting the engine to the controller. The controller receives the starting signal from the start-button, performs authentication on a key FOB of the automobile, separates the safety member from the first hole when the key FOB passes authentication and drives the motor to operate the steering column connected to the shaft so as to start the engine. The controller inserts the safety member into the first hole to lock the shaft when the engine is started.

A method for starting the engine of an automobile using a start-button according to the present invention comprises the steps of determining whether a plurality of signals including the start-button are on, requesting a key FOB to transmit the ID thereof, receiving the ID from the key FOB, and performing authentication on the key FOB using the received ID when the signals are on, providing power to a starting motor and applying a driving signal to a motor driver to drive a motor when the key FOB passes authentication, driving a shaft according to the operation of the motor to operate a steering column and driving the starting motor to start the engine, and inserting a safety member into a first hole of the shaft to block the shaft from moving and rotating when the engine is started.

According to the present invention, the key cylinder and the ignition lock body are integrated with each other, the steering column is operated using the motor provided to the inside of the key cylinder, and a proper user can operate the start-button to easily start the engine without having a car key. Accordingly, it is possible to automatically start the engine only using the start-button without inserting a mechanical car key into the key cylinder.

Furthermore, the safety member is inserted into a hole formed at the shaft to block the shaft from moving and rotating when the engine is started, and thus the motor is prevented from rotating due to external impact applied to the car and other noise impacts caused by an uneven surface of road.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIGS. 1A and 1B are perspective views for explaining a conventional automobile ignition lock device;
FIG. 2 is an exploded perspective view of an ignition lock body and a key cylinder shown in FIG. 1;
FIG. 3 is a view for explaining combination of an ignition lock body and a key cylinder in an apparatus for starting the engine of an automobile according to an embodiment of the present invention;
FIG. 4 is a view showing a configuration of the apparatus for starting the engine of an automobile according to an embodiment of the present invention;
FIG. 5 is an exemplary view showing the position of a start-button according to an embodiment of the present invention;
FIGS. 6A and 6B are views for explaining the operation of a safety member according to an embodiment of the present invention;
FIG. 7 is a block diagram showing a configuration of a controller shown in FIG. 4;
FIG. 8 is a flow chart of a method for starting the engine of an automobile according to an embodiment of the present invention; and
FIG. 9 is a flow chart of an operation of blocking power of a motor driver of the apparatus for starting the engine of an automobile according to an embodiment of the present invention.

### DETAILED DESCRIPTION OF THE PREFERRED EMBODIMENTS

The present invention will now be described more fully with reference to the accompanying drawings, in which exemplary embodiments of the invention are shown. The invention may, however, be embodied in many different forms and should not be construed as being limited to the embodiments set forth therein; rather, these embodiments are provided so that this disclosure will be thorough and complete, and will fully convey the concept of the invention to those skilled in the art.

### Apparatus for starting the engine of an automobile

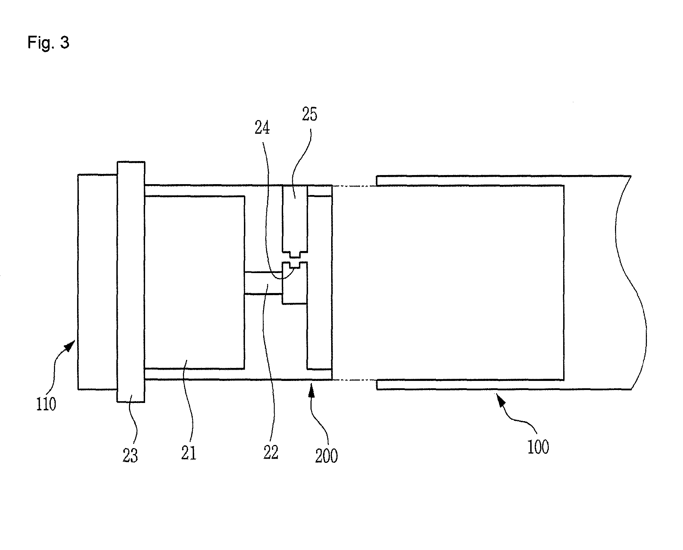

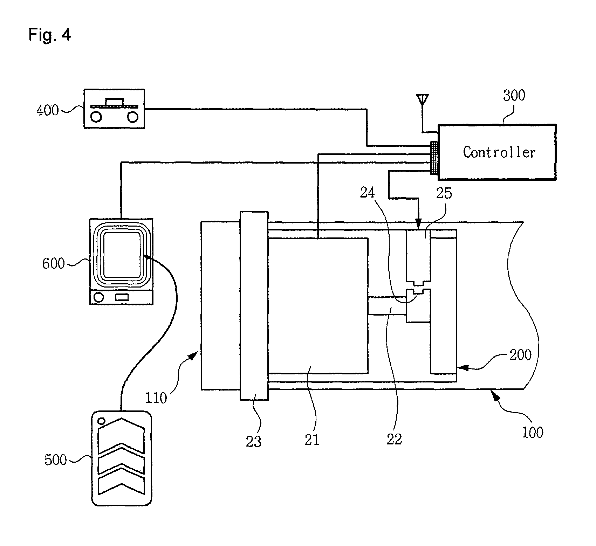

Referring to FIGS. 3 and 4, an apparatus for starting the engine of an automobile includes an ignition lock body 100, a key cylinder 200, a start-button 400, and a controller 300. The ignition lock body 100 is connected to a steering column of the automobile. The key cylinder 200 is combined with the inside of the ignition lock body 100. The key cylinder 200 is extended into the ignition lock body 200 and includes a motor 21 that is connected to the steering column and has a shaft 22 with a first hole 24 formed at one end thereof and a safety member 25 inserted into and separated from the first hole 24. The start-button 400 applies a starting signal for starting the engine to the controller 300. The controller 300 is a microprocessor that controls the overall operation of the apparatus for starting the engine of the automobile. The controller 300 receives the starting signal from the start-button 400 and performs authentication on a key FOB 500 of the automobile. When the key FOB 500 passes the authentication, the controller 500 separates the safety member 25 from the first hole 24 and drives the motor 21 to operate the steering column connected to the shaft 22 so as to start the engine. When the engine is started, the controller 300 inserts the safety member 25 into the first hole 24 to lock the shaft 22.

The apparatus for starting the engine of the automobile according to an embodiment of the present invention now will be described in more detail.

The ignition lock body 100 can have a hollow cylindrical shape. The key cylinder 200 is mechanically combined with the inside of the ignition lock body 100 through a combining member such as a combining pin or bonding. The ignition lock body 100 is connected to the steering column connected to a steering wheel of the automobile.

The key cylinder 200 includes the motor 21 with the shaft 22 and the safety member 25. The shaft 22 is connected to the steering column and has the first hole 24 having a predetermined size formed at one end thereof. The motor 21 is driven under the control of the controller 300 to move and rotate the shaft 22. A driving force according to the moving and rotating operation of the shaft is transmitted to the steering column connected to the shaft 22 to automatically operate the steering wheel and start the engine of the automobile. The safety member 25 is inserted into or separated from the first hole 24 formed at one end of the shaft 22 according to a control signal of the controller 300. The first hole 23 and the safety member 25 prevents the motor 21 from rotating due to external impact applied to the automobile and other noise impacts caused by an uneven surface of road in an ignition on step after the automobile is started. The key cylinder 200 can be integrated with an ignition knob 110 and a coil antenna 23.

The start-button 400 is connected to the controller 300 and performs a switching function for starting the engine of the automobile. When a driver pushes the start-button 400, a predetermined authentication process is performed and the motor 21 is driven to move and rotate the shaft 22 so that the engine can be started. An automobile has four power mode steps. That is, the power mode of the automobile is changed among lock, accessory power supply, ignition on and start steps according to the rotation of the car key. The start-button 400 of the present invention can be used to change the power mode.

The controller 300 changes the power mode according to the time for which the start-button 400 is pushed and the number of times of pushing the start-button 400. For example, the power mode is changed to accessory power supply state when the start-button 400 is pushed once for shorter than three seconds in lock state and changed to ignition on state when the start-button 400 is pushed twice for shorter than three seconds. The power mode is changed to the ignition on state when the start-button 400 is pushed once in the accessory power supply state. The power mode is change to lock state when the start-button 400 is pushed for longer than three seconds in the accessory power supply state, ignition on state and start state.

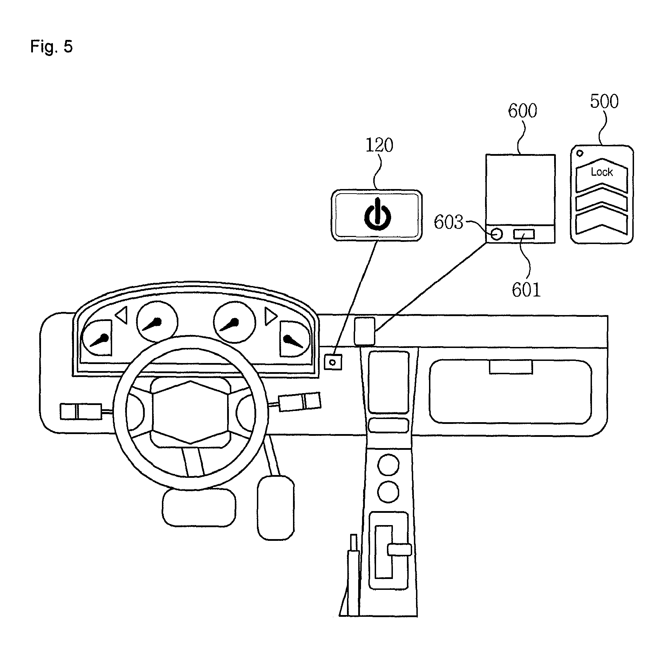

Referring to FIG. 5, the start-button 400 can be attached to a dash panel at a driver seat such that a driver can use the start-button 400 conveniently. The start-button 400 is a switch for easily starting the automobile engine without requiring the driver to inserting a mechanical key into the key hole and rotating the key. When the driver who has the key FOB 500 pushes the start-button 400, the starting signal is generated and transmitted to the controller 300. The controller 300 performs authentication on the key FOB 500 when the starting signal is applied thereto and transmits a driving signal to the motor 21 to drive the motor 21 when the key FOB 500 passes the authentication. The steering column connected to the shaft 22 is driven by the motor 21 to operate the steering wheel and start the engine.

When the engine is started, the controller 300 inserts the safety member 25 into the first hole 24 of the shaft 22 in order to prevent the motor 21 from being operated by disturbance to move and rotate the shaft 22. That is, the shaft is locked in order to block the shaft 22 from moving and rotating for safety after the engine is started.

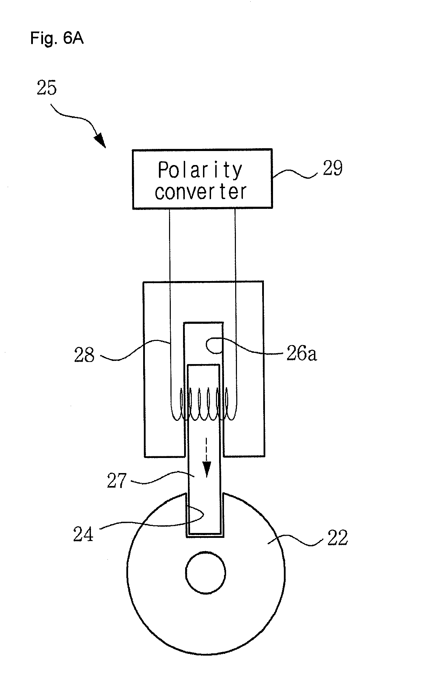

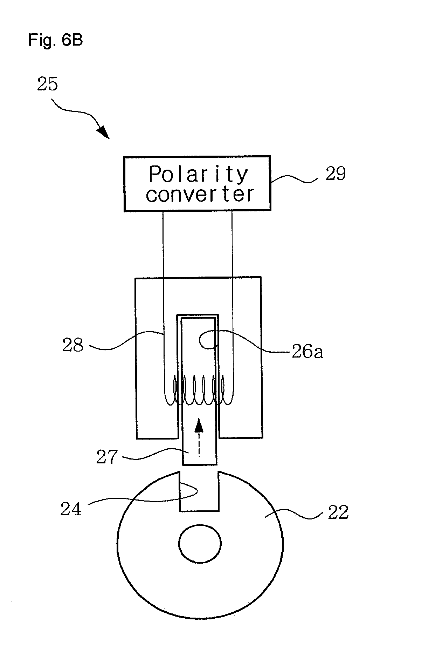

Referring to FIGS. 6A and 6B, the safety member 25 includes a body 26, a mobile 27 moving inside the body 26, a coil 28 partially winding the body 26, and a polarity converter 29 for converting polarity of current flowing through the coil 28.

The body 26 has a second hole 26a into/from which the mobile 27 is inserted/ejected according to a control signal of the controller 300. The coil 28 is wound in a solenoid form such that the coil 28 includes at least the second hole 26a. The polarity of both ends of the coil 28 is converted by the polarity converter 29 that operates according to a signal of the controller 300. The mobile 27 is formed of metal and, preferably, it is a magnet. When current is applied to this solenoid coil, the coil 28 becomes an electromagnet. When the mobile 27 is inserted into the electromagnet, the mobile 27 moves in the length direction of the solenoid coil according to change of the polarity of the coil 28. In other words, both ends of the electromagnet have magnetism of S-pole or N-pole according to current applied to the coil 28. The polarity is determined by the winding direction of the coil 28 and the direction of current applied to the coil 28. Accordingly, the polarity converter 29 changes the direction of current applied to the coil 28 to convert the polarity of both ends of the coil 28. The mobile 27 is moved using this principle such that the mobile is inserted into or ejected from the hole 24 formed at the shaft 22.

The controller 300 requests the key FOB 500 carried by the driver to transmit its ID and receives the ID through wireless communication with the key FOB 500 when the starting signal is transmitted thereto from the start-button 400. The controller 300 performs authentication on the key FOB 500 using the received ID. The controller 300 receives various signals with respect to the automobile. That is, the controller 300 receives a key FOB docking signal, a driver seat door closing signal, a bake pedal signal, a gearshift parking signal, a parking brake signal, a run/crank signal, a start completion signal, etc. in addition to the starting signal from the start-button 400. The controller 300 receives these signals in order to confirm whether a user who pushes the start-button 400 is a proper user and whether the automobile is in a safe state before the engine is started. When this precondition for safety is satisfied, authentication of the key FOB 500 is carried out. Here, the precondition is an example and can be set in various manners.

The key FOB 500 has its ID that is used to confirm a proper user of the automobile. Furthermore, the key FOB 500 includes a battery (not shown) so that the key FOB 500 can perform wireless communication with the controller 300 when approaching or entering the automobile. That is, the controller 300 can carry out wireless communication with the key FOB 500 through an antenna set in the inside of the automobile.

The key FOB 500 can be combined with a docking unit 600. For example, the docking unit 600 can be provided to a predetermined portion of the driver seat dash panel such that the key FOB 500 and the docking unit 600 can be combined with each other, as shown in FIG. 5. When the key FOB 500 is combined with the docking unit 600, a push button 601 is pushed to generate the key FOB docking signal and the docking signal is input to the controller 300. Accordingly, the controller 300 can recognize that the key FOB 500 is combined with the docking unit 600. In FIG. 5, reference number 603 represents an indication lamp that indicates the battery state of the key FOB 500 combined with the docking unit 600. For example, the indication lamp 603 can indicate a satisfactory battery state as blue and indicate a battery state requiring charging as red.

As described above, the controller 300 receives a plurality of external signals and performs a process for starting the automobile engine under a predetermined condition. The controller 300 receives the starting signal from the start-button 400 and a plurality of signals representing the state of the automobile and performs authentication on the key FOB 500 through wireless communication with the key FOB 500. When the key FOB 500 passes authentication, the controller 300 applies power to the motor 21 to move and rotate the shaft 22 so as to start the engine of the automobile.

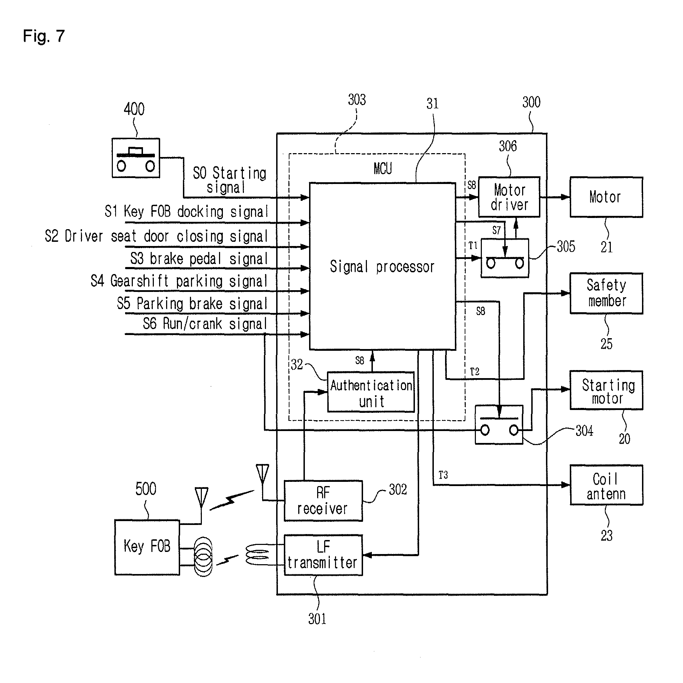

Referring to FIG. 7, the controller 300 of the apparatus for starting the engine of an automobile according to the current embodiment includes a wireless transmitter 301, a wireless receiver 302, a micro control unit (MCU) 303, a first relay 304, a second relay 305, and a motor driver 306.

The wireless transmitter 301 and the wireless receiver 302 transmit and receive data through wireless communication with the key FOB 500. The wireless transmitter 301 transmits a radio signal to the key FOB 500 according to an output signal from the MCU 303 to request the key FOB 500 to transmit the ID thereof. Specifically, the MCU 303 transmits an ID request signal to the key FOB 500 through the wireless transmitter 301 when receiving a start-button on signal S0, a brake pedal signal S3, a gearshift parking signal S4 and a parking brake signal S5. The wireless receiver 302 receives the ID from the key FOB 500. For example, the wireless transmitter 301 transmits the ID request signal to the key FOB 500 through low frequency (LF) communication. The wireless receiver 302 receives the ID from the key FOB 500 through radio frequency (RF) communication.

The MCU 303 includes a signal processor 31 and an authentication unit 32. The signal processor 31 receives the start-button on signal S0, a key FOB docking signal S1, a driver seat door closing signal S2, the brake pedal signal S3, the gearshift parking signal S4, the parking brake signal S5, a run/crank signal S6, a start completion signal S7, and a key FOB authentication result signal S8. The signal processor 311 transmits a predetermined control signal to the wireless transmitter 301 when the start-button on signal S0, the brake pedal signal S3, the gearshift parking signal S4 and the parking brake signal S5 among the signals S0 to S8 are input thereto. For example, the signal receiver transmits the ID request signal to the key FOB 500 through the wireless transmitter 301 and receives the ID of the key FOB 500 through the wireless receiver when the brake pedal signal S3, the gearshift parking signal S4 and the parking brake signal S5 are received after the start-button on signal S0 is received.

The authentication unit 32 compares the ID of the key FOB 500, received through the wireless receiver 302, with ID stored therein and determines whether the two IDs correspond to each other to authenticate the key FOB 500.

Here, the signal processor 31 receives the key FOB authentication result signal S8 from the authentication unit 32 and outputs an ON signal to the first relay (A contact) 304 when the key FOB 500 successively passes authentication. The signal processor 31 receives and outputs the start completion signal S7 to the second relay (B contact) 305. The signal processor 31 outputs an ON signal to the motor driver 306 when the key FOB 500 passes authentication. In addition, the signal processor 31 outputs a control signal T2 for operating the safety member 25 in order to prevent the shaft 22 from moving and rotating after the engine is started to eliminate the possibility that the motor 21 is driven due to disturbance such as shaking of automobile and an uneven surface of road after engine has been started.

The first relay 304 receives the run/crank signal S6 and transmits the run/crank signal S6 to a starting motor 20 when the ON signal is output from the signal processor 31. That is, a signal for starting is provided to the starting motor 20.

The second relay (B contact) 305 applies a signal T1 to the motor driver 306 in the initial stage and its contact is off when the start completion signal S7 is input thereto to block the signal T1 from being input to the motor driver 306. This is for the purpose of blocking the signal T1 applied to the motor driver 306 after the engine is started to prevent the motor driver 306 from operating due to disturbance such as noise of electric signals after the engine is started.

The motor driver 306 drives the motor 21 when receiving the key FOB authentication result signal S8 representing that the key FOB passes authentication. When the authentication result signal S8 is received while power is applied to the motor driver 306 according to the second relay 305 in the initial stage, as described above, the motor driver 306 drives the motor 21 to move and rotate the shaft 22. Then, the steering column operates according to the moving and rotating operation of the shaft 22 and the engine starting signal is transmitted to the starting motor 20 to start the engine. The motor driver 306 is driven when the key FOB 500 normally passes authentication while the brake pedal signal S2, the gearshift parking signal S3 and the parking brake signal S4 are input after the starting signal is input from the start-button 400.

As described above, the motor driver 306 drives the motor 21 to move and rotate the shaft 22 such that the steering column combined with the shaft 22 operates to automatically operate the steering wheel and start the engine. Accordingly, the automobile engine can be automatically started without having an additional driver's operation.

The signal processor 31 outputs a signal T3 for operating the coil antenna 23 included in the ignition lock device if required. By doing so, a voltage is induced to the coil antenna 23 to supply power to the battery of the key FOB 500.

The apparatus for starting the engine of an automobile according to the present invention can further include the coil antenna 23 for supplying power to the battery of the key FOB 500. The controller 300 can apply a driving signal to the coil antenna 23. The coil antenna 23 is used when the batteries of the apparatus for starting the engine of an automobile and the key FOB 500 have insufficient power. The coil antenna 23 can also be used for an immobilizer function of the automobile.

### Method for starting the engine of an automobile

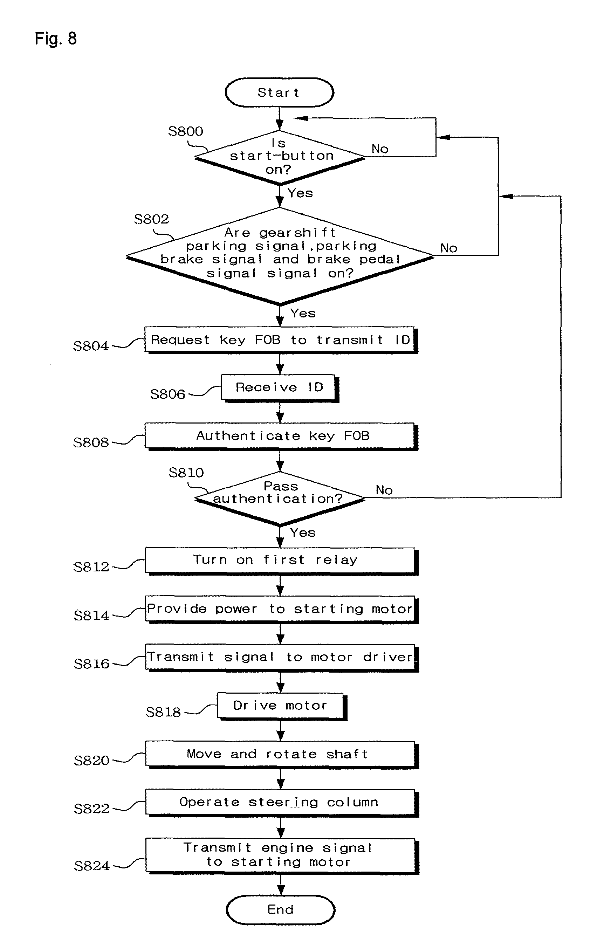

A method for starting the engine of an automobile according to an embodiment of the present invention will now be explained with reference to FIGS. 3 to 8. FIG. 8 is a flow chart of the method for starting the engine of an automobile according to an embodiment of the present invention.

The controller 300 determines whether the start-button 400 for starting the engine of the automobile is pushed in operation S800.

When it is determined that the start-button 400 is not pushed in operation S800, the controller 300 waits in the initial state. When it is determined that the start-button 400 is pushed in operation S800, the controller 300 determines whether the brake pedal signal S3, the gearshift parking signal S4 and the parking brake signal S5 are input in operation S802.

When it is determined that the three signals are not applied in operation S802, the controller 300 waits in the initial state. When it is determined that the three signals are input in operation S802, the controller 300 requests the key FOB 500 to transmit the ID thereof in operation S804 and receives the ID from the key FOB 500 in operation S806.

The controller 300 compares the received ID with previously stored ID and performs authentication on the key FOB 500 in operation S808.

When the key FOB 500 passes the authentication in operation S810, the controller 300 turns on the first relay 304 in operation S812 to provide power to the starting motor 20 in operation S814. The controller 300 applies a signal to the motor driver 306 in operation S816. Then, the motor driver 306 is operated to drive the motor 21 in operation S818. The motor 21 moves and rotates the shaft 22 in operation S820. The steering column is operated according to the moving and rotating operation of the shaft 22 in operation S822 and an engine starting signal is transmitted to the starting motor 20 to start the engine in operation S824. Here, since the starting motor 20 is being provided with power, the engine starting signal is applied to the starting motor 20 to start the engine according to the moving and rotating operation of the shaft 22.

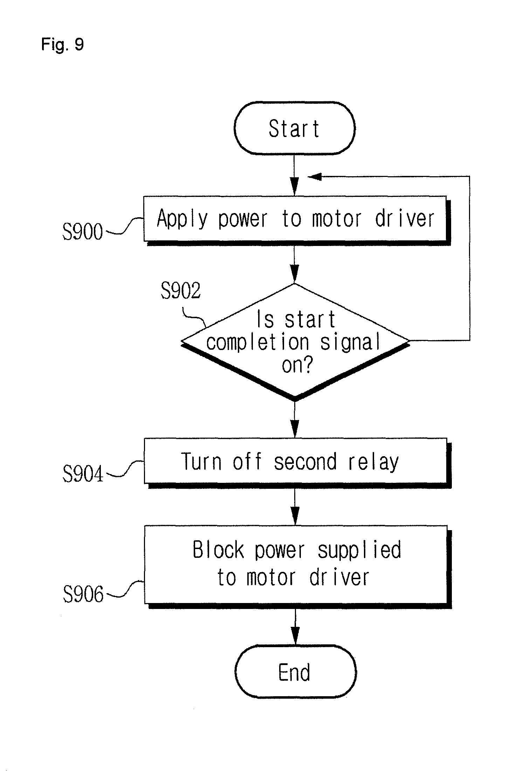

An operation of blocking power provided to the motor driver 306 in the apparatus for starting the engine of an automobile according to an embodiment of the present invention will now be explained with reference to FIGS. 7, 8 and 9.

Power is applied to the motor driver 306 in the initial stage in operation S900 and the controller 300 determines whether the engine start completion signal S7 is input in operation S902.

When it is determined that the engine start completion signal is not input in operation S902, the controller 300 waits in the initial state. When it is determined that the engine start completion signal is input in operation S902, the controller 300 turns off the second relay 305 in operation S904. Since the second relay is a B-contact relay, the contact of the second relay 305 is on in the initial stage and it is off when the engine start completion signal is input.

The second relay 305 is off in operation S904, and thus the power applied to the motor driver 306 is blocked in operation S906. This operation is performed in order to prevent the motor driver 306 from being operated by predetermined disturbance after the engine is started.

While the present invention has been particularly shown and described with reference to exemplary embodiments thereof, it will be understood by those of ordinary skill in the art that various changes in form and details may be made therein without departing from the spirit and scope of the present invention as defined by the following claims.

Provided are an apparatus and a method for starting the engine of an automobile using a start-button, which allow a proper user to start the engine through a simple operation of the start-button for starting the engine without having a car key. In the apparatus and method for starting the engine of an automobile, it is determined whether a plurality of signals including the start-button are on. A key FOB is requested to transmit its ID, the ID is received from the key FOB, and authentication is performed on the key FOB using the received ID when the signals are on. Power is provided to a starting motor and a driving signal is applied to a motor driver to drive a motor when the key FOB passes authentication. A shaft is driven according to the operation of the motor to operate a steering column and the starting motor is driven to start the engine. A safety member is inserted into a first hole of the shaft to block the shaft from moving and rotating when the engine is started.

## Claims

1. An apparatus for starting the engine of au automobile using a start-button, comprising:
an ignition lock body connected to a steering column of the automobile;
a key cylinder combined with the inside of the ignition lock body and extended into the ignition lock body and including a motor with a shaft that is connected to the steering column and has a first hole formed at one end thereof and a safety member inserted/separated into/from the first hole;
a start-button for applying a starting signal for starting the engine; and
a controller for receiving the starting signal from the start-button, performing authentication on a key FOB of the automobile, separating the safety member from the first hole when the key FOB passes authentication, driving the motor to operate the steering column connected to the shaft so as to start the engine and inserting the safety member into the first hole to lock the shaft when the engine is started.

2. The apparatus of claim 1, wherein the controller requests the key FOB to transmit the ID thereof and performs authentication on the key FOB using the received ID after the starting signal from the start-button is input thereto.

3. The apparatus of claim 2, wherein the controller requests the key FOB to transmit the ID thereof when a brake pedal signal, a gearshift parking signal and a parking brake signal provided to the automobile are input after the starting signal from the start-button is input thereto.

4. The apparatus of claim 3, wherein the controller comprises:
a wireless transmitter for wirelessly transmitting an ID request signal to the key FOB;
a wireless receiver for wirelessly receiving the ID from the key FOB
an authentication unit for performing authentication on the key FOB using the received ID;
a signal processor for receiving and outputting an authentication result signal from the authentication unit, the starting signal from the start-button and a plurality of external state signals provided to the automobile; and
a motor driver for driving the motor when the authentication result signal is input thereto from the signal processor.

5. The apparatus of claim 4, wherein the signal processor transmits the ID request signal to the key FOB through the wireless transmitter when a start-button signal, the brake pedal signal, the gearshift parking signal and the parking brake signal among the received state signals are ON signals.

6. The apparatus of claim 5, wherein the wireless transmitter transmits the ID request signal to the key FOB through LF communication and the wireless receiver receives the ID from the key FOB through RF communication.

7. The apparatus of claim 6, wherein the controller further comprises a first relay for transmitting a run/crank signal among the plurality of state signals to a starting motor when the authentication result signal is an ON signal.

8. The apparatus of claim 7, wherein the controller further comprises a second relay for transmitting a power supply signal to the motor driver in the initial stage and blocking the power supply signal when a start completion signal is input.

9. The apparatus of claim 8, wherein the safety member comprises:
a body having a predetermined volume;
a second hole formed at a predetermined portion of the body, opposite to the first hole;
a mobile moving inside the second hole;
a coil wound in a predetermined solenoid form such that the second hole is included in the coil; and
a polarity converter for converting the polarity of both ends of the coil,
wherein the mobile is inserted/ejected into/from the second hole according to change of polarity of the coil according to a control signal of the controller.

10. The apparatus of claim 1, wherein the controller changes a power mode according to the time for which the start-button is pushed and the number of times of pushing the start-button.

11. A method for starting the engine of an automobile using a start-button, comprising the steps of:
determining whether a plurality of signals including the start-button are on;
requesting a key FOB to transmit the ID thereof, receiving the ID from the key FOB, and performing authentication on the key FOB using the received ID when the signals are on;
providing power to a starting motor and applying a driving signal to a motor driver to drive a motor when the key FOB passes authentication;
driving a shaft according to the operation of the motor to operate a steering column and driving the starting motor to start the engine; and
inserting a safety member into a first hole of the shaft to block the shaft from moving and rotating when the engine is started.

12. The method of claim 11, wherein the determining step comprises the steps of:
determining whether the start-button is on; and
determining whether a brake pedal signal, a gearshift parking signal and a parking brake signal are on when the start-button is on.

13. The method of claim 12, wherein the safety member is separated from the first hole of the shaft in the step of driving the shaft according to the operation of the motor to operate the steering column and driving the starting motor to start the engine.

14. The method of claim 13, wherein the step of performing authentication on the key FOB using the received ID comprises the steps of:
requesting the key FOB to transmit the ID thereof;
receiving the ID from the key FOB in response to the request;
determining whether the received ID corresponds to a previously stored ID; and
determining that the key FOB passes authentication when the received ID corresponds to the previously stored ID.

15. The method of claim 14, further comprising the step of blocking power applied to the motor driver when the engine is started after the step of driving the shaft according to the operation of the motor to operate the steering column and driving the starting motor to start the engine.
